# EUROPEAN PATENT APPLICATION

(11) **EP 4 624 144 A1**
(43) Date of publication of application: **01.10.2025**
(21) Application number: 24883556.3
(22) Date of filing: 07.11.2024
(51) Int. Cl.: B30B 1/18, B30B 15/00, F16C 19/06, F16C 19/36, F16C 33/78

(54) **SERVO PRESS MECHANISM, PRESSING METHOD, PRODUCTION METHOD FOR BEARING, PRODUCTION METHOD FOR MECHANICAL DEVICE, AND PRODUCTION METHOD FOR VEHICLE**

(30) Priority: 07.02.2024 JP 2024016904
(71) Applicant: NSK Ltd., Tokyo 141-8560 (JP)
(72) Inventor: NAKANO, Makoto, Fujisawa-shi, Kanagawa 251-8501 (JP)
(74) Representative: Grünecker Patent- und Rechtsanwälte PartG mbB
(86) International application number: PCT/JP2024/039653
(87) International publication number: WO 2025/169555

(57) **Abstract**

A servo press mechanism (1) includes a slide (2), a main press unit (3) having a master shaft (5), and a sub-press unit (4) having slave shafts (6a, 6b). The slide (2) is movable in a first direction which is a pressing direction and in a second direction different from the first direction, based on driving due to the main press unit (3). In a first mode, the slide (2) is driven with the assistance of the sub-press unit (4). In a second mode, the slide (2) is driven substantially without the assistance of the sub-press unit (4).

## Description

### TECHNICAL FIELD

The present invention relates to a servo press mechanism, a press processing method, a bearing manufacturing method, a mechanical device manufacturing method, and a vehicle manufacturing method.

Priority is claimed on Japanese Patent Application No. 2024-016904, filed February 7, 2024, the content of which is incorporated herein by reference.

### BACKGROUND ART

Press mechanisms are used in the manufacturing processes of various mechanical devices such as automobiles and industrial machines.

Representative press mechanisms include press mechanisms equipped with a conversion mechanism such as a crank type, link type, or knuckle type, and single-axis press mechanisms having one press shaft.

In recent years, in the technical field of press mechanisms, there has been an increasing demand for energy saving and noise reduction, and thus there is an increasing demand for servo presses that can meet this demand.

A single-axis servo press includes a servo motor as a drive source, and a rotary-to-linear motion conversion mechanism such as a ball screw mechanism that converts the rotation of the servo motor into a linear motion.

In a single-axis servo press, a relationship between a magnitude of a thrust and a processing speed is determined by the specifications of the servo motor and the specifications of the rotary-to-linear motion conversion mechanism. That is, there is a relationship between the magnitude of the thrust and the processing speed such that, once a constant torque region of the servo motor is exceeded, the thrust decreases as the processing speed increases. Therefore, it is difficult for a single-axis servo press to achieve both high thrust and high speed.

Japanese Unexamined Patent Application, First Publication No. 2014-147956 discloses a multi-axis press mechanism equipped with a plurality of press axes.

The press mechanism of the conventional structure described in JP 2014-147956 A includes one master shaft and a plurality of slave shafts disposed in parallel with the master shaft. The master shaft and the plurality of slave shafts are each driven by a separate servo motor, and each has a tip end portion fixed to a slide (a pressure plate).

According to the press mechanism of the conventional structure described in JP 2014-147956 A, a thrust can be applied from the master shaft and the plurality of slave shafts with respect to the slide to which a die is fixed. Thus, the thrust borne by each of the master shaft and the slave shafts is small, and the servo motors that drive the master shaft and the plurality of slave shafts are driven at a high rotational speed. Therefore, it is possible to achieve both high thrust and high speed.

### Citation List

### Patent Document

Patent Document 1: Japanese Unexamined Patent Application, First Publication No. 2014-147956
Patent Document 2: Japanese Unexamined Patent Application, First Publication No. H11-221700

### SUMMARY OF INVENTION

### Technical Problem

In the press mechanism described in JP 2014-147956 A, the tip end portions of the master shaft and the plurality of slave shafts are fixed to the slide. To move the slide in a parallel manner, it is necessary to simultaneously control all of the servo motors that drive the master shaft and the plurality of slave shafts. However, it is difficult to simultaneously control the plurality of servo motors to translate the slide.

An object of the present invention is to provide a servo press mechanism that is more easily controlled than conventional mechanisms and is capable of achieving both high thrust and high speed.

### Solution to Problem

In an aspect of the present invention, a servo press mechanism includes a slide, a main press unit having a master shaft, and a sub-press unit having a slave axis, wherein the slide is movable in a first direction which is a pressing direction, and in a second direction different from the first direction, based on driving due to the main press unit, and a mechanical connection state between the sub-press unit and the slide changes between a first mode in which the slide is driven with assistance of the sub-press unit and a second mode in which the slide is driven substantially without the assistance of the sub-press unit.

In another aspect of the present invention, a servo press mechanism includes a slide, a main press unit having a master shaft that reciprocates the slide, moves the slide in a reciprocating parallel manner, and applies a thrust to the slide, and a sub-press unit having a slave shaft that is disposed in parallel with the master shaft and applies a thrust to the slide without reciprocating the slide.

In still another aspect of the present invention, a press processing method processes a workpiece using any one of the servo press mechanisms described above.

In yet another aspect of the present invention, a bearing manufacturing method manufactures a bearing using any one of the servo press mechanisms described above.

In yet still another aspect of the present invention, a mechanical device manufacturing method includes manufacturing a bearing using the above-described bearing manufacturing method, and assembling a mechanical device using the bearing.

In yet still another aspect of the present invention, a bearing manufacturing method includes manufacturing a bearing using the above-described bearing manufacturing method, and assembling a vehicle using the bearing.

### Advantageous Effects of Invention

According to the aspects of the present invention, control is simpler than in the past, and it is possible to achieve both high thrust and high speed. Furthermore, according to the aspects of the present invention, it is possible to improve productivity, which is advantageous for reducing costs.

### BRIEF DESCRIPTION OF DRAWINGS

[FIG. 1] A schematic partial cross-sectional view showing a servo press mechanism when seen from the front.
[FIG. 2] A partially enlarged view of FIG. 1.

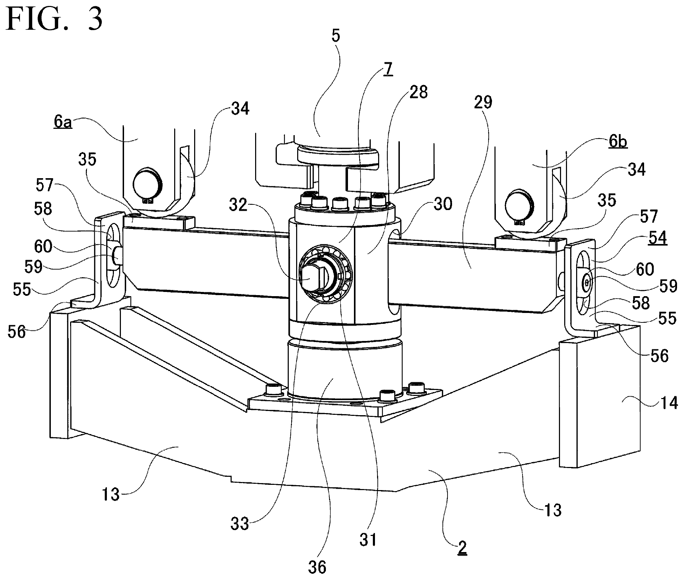

[FIG. 3] A partially enlarged perspective view of the servo press mechanism.
[FIG. 4] A schematic diagram showing a state in which height positions of two slave shafts are misaligned when the servo press mechanism is used, where (A) shows a state before press processing begins, and (B) shows a state after press processing begins.
[FIG. 5] A half cross-sectional view showing a bearing.
[FIG. 6] A cross-sectional view of a motor showing an example of use of bearings.
[FIG. 7] A partial cutaway perspective view showing the bearing.

### DESCRIPTION OF EMBODIMENTS

Hereinafter, an embodiment of the present invention will be described with reference to the drawings.

In one embodiment, a press mechanism (a servo press mechanism) is used in a bearing manufacturing method.

In another embodiment, the press mechanism is not limited to the bearing manufacturing method, and can be used in a method for manufacturing other machine parts other than bearings.

In one embodiment, for example, the press mechanism may be used for at least one of the following processes: a process of press-fitting a workpiece into another workpiece, a process of performing press processing such as caulking, punching, drawing, bending, and compression on a workpiece, a process of pressing and bonding two workpieces together, and a process of injection-molding a resin.

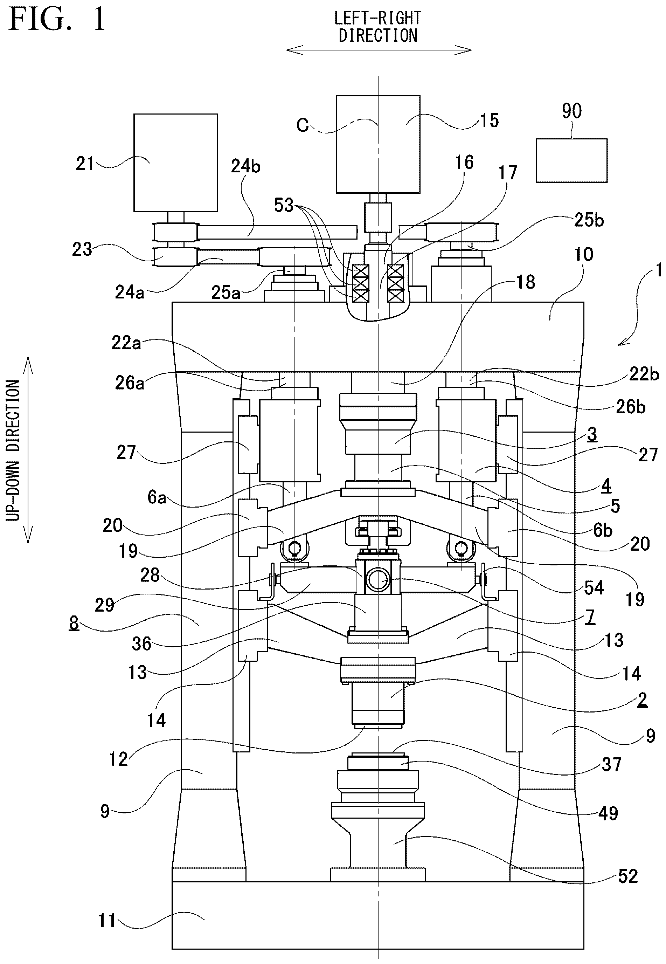

In one example, a sealing member 37 constituting a bearing 38 is press-fitted into an outer ring 42 constituting the bearing 38 using a press mechanism 1 shown in FIG. 1. Hereinafter, a configuration of the press mechanism 1 and a configuration of the bearing 38 will be described, and then a manufacturing method of the bearing 38 using the press mechanism 1 will be described.

### [Configuration of press mechanism]

The press mechanism 1 includes a slide 2, a main press unit 3, and a sub-press unit 4.

Each of the main press unit 3 and the sub-press unit 4 has a servo press configuration, and each generates a thrust (a pressing force, a press load).

The main press unit 3 has a master shaft 5. The sub-press unit 4 has slave shafts (a first slave shaft 6a and a second slave shaft 6b) disposed in parallel with the master shaft 5.

In the press mechanism 1, a central axis of the master shaft 5 coincides with a reference axis C which is the center of press. In one example, the reference axis C is aligned in a vertical direction (an up-down direction). In another example, the reference axis C is aligned in another direction, such as a horizontal direction.

The main press unit 3 reciprocates the slide 2 to which a tool is fixed via the master shaft 5. The slide 2 is movable in a vertically downward direction (a first direction) which is a pressing direction, and in a vertically upward direction (a second direction) which is a counter-pressing direction, based on driving by the main press unit 3. The slide 2 performs a reciprocating parallel motion. A thrust is applied to the slide 2 based on the driving by the main press unit 3. The sub-press unit 4 applies a thrust to the slide 2 via the slave shafts 6a and 6b without driving the slide 2 to reciprocate.

In other words, the press mechanism 1 is capable of transmitting forces in the pressing direction (the first direction) and the counter-pressing direction (the second direction) from the master shaft 5 to the slide 2. Only the force in the pressing direction (the first direction) can be transmitted from the slave shafts 6a and 6b to the slide 2. For example, the slide 2 and the master shaft 5 are connected, directly or via another member, so as to enable transmission of forces in the pressing direction and the counter-pressing direction from the master shaft 5 to the slide 2. The slide 2 and the slave shafts 6a and 6b are not connected directly or via any other member, and only the force in the pressing direction is transmitted from the slave shafts 6a and 6b to the slide 2.

The press mechanism 1 has a first mode in which the slide 2 is driven with assistance of the sub-press unit 4, and a second mode in which the slide 2 is driven substantially without the assistance of the sub-press unit 4.

In the first mode, a force from the main press unit 3 is applied to the slide 2, and a force from the sub-press unit 4 is additionally applied to the slide 2. The slide 2 moves in the pressing direction (the first direction) in the first mode. In one example, in the press mechanism 1, in the first mode, a thrust from the master shaft 5 of the main press unit 3 and a thrust from the slave shafts 6a and 6b of the sub-press unit 4 are applied coaxially to the slide 2. The press mechanism 1 can apply the sum of the thrust generated by the main press unit 3 and the thrust generated by the sub-press unit 4 to the sealing member 37.

In the second mode, the force from the main press unit 3 is applied to the slide 2, and the force from the sub-press unit 4 is not substantially applied to the slide 2. In the second mode, the slide 2 moves in the pressing direction (the first direction) or the counter-pressing direction (the second direction).

The press mechanism 1 is provided with a controller 90 that controls the driving of the master shaft 5 and the slave shafts 6a and 6b. The controller 90 receives output signals from an encoder of a first servo motor 15, an encoder of a second servo motor 21, and a load cell 36, which will be described below, and calculates current positions of the slide 2 and the master shaft 5, current positions of the slave shafts 6a and 6b, a torque value of the first servo motor 15, a torque value of the second servo motor 21, a thrust (a press load) applied to the slide 2, and the like. Then, based on these calculated values, the driving of the master shaft 5 and the slave shafts 6a and 6b is controlled.

In one embodiment, the slide 2 is not directly fixed to the master shaft 5 and the slave shafts 6a and 6b. The press mechanism 1 is provided with a transmission mechanism (a transmission unit) 7 between the slide 2 and the master shaft 5 and slave shafts 6a and 6b. In another embodiment, the press mechanism may be configured not to include the transmission mechanism (the transmission unit) but to apply a thrust directly from the master shaft and the slave shafts to the slide.

In one embodiment, the press mechanism 1 further includes a frame 8 that supports the main press unit 3 and the sub-press unit 4, and constitutes a press processing device. In another embodiment, the press mechanism 1 may be used without a frame and incorporated into a part of another mechanical device.

In one example, the press mechanism 1 has a line symmetrical shape with respect to the reference axis C, except for some components such as the second servo motor 21.

Hereinafter, a detailed description will be given of each member constituting the press mechanism 1. In the following description, an up-down direction, a left-right direction, and a depth direction refer to the respective directions when the press mechanism 1 is seen from the front. In addition, the pressing direction corresponds to a downward direction (a vertically downward direction), and the counter-pressing direction corresponds to an upward direction (a vertically upward direction).

### <Frame>

In one embodiment, the frame 8 includes a pair of support posts 9 and an upper frame 10 and forms a gate-shaped frame. The frame 8 has a symmetrical shape with respect to the reference axis C. Specifically, the frame 8 as a whole has a line symmetrical shape with respect to the reference axis C.

The pair of support posts 9 stand upright with their respective central axes aligned in the vertical direction, and are disposed parallel to each other to be spaced apart in the left-right direction. In the illustrated example, each of the support posts 9 has a substantially cylindrical shape.

The upper frame 10 is bridged between the pair of support posts 9. Specifically, the upper frame 10 is bridged in the left-right direction between upper end portions of the pair of support posts 9.

The frame 8 further includes a lower frame 11 that serves as a base. The lower frame 11 is disposed below the upper frame 10, and lower end portions of the pair of support posts 9 are connected to the lower frame 11. A bolster 52 is fixed to an upper surface of the lower frame 11.

In one embodiment, the frame 8 is a gate-shaped frame with a pair of support posts. In another embodiment, the frame may have other configurations, such as a C-shaped frame. For example, the frame may have a three-fold symmetrical configuration with three support posts, or a four-fold symmetrical configuration with four support posts.

### <Slide>

In one embodiment, the slide 2 is disposed on the reference axis C. The slide 2 is disposed below the main press unit 3 and between the pair of support posts 9 in the left-right direction.

A processing tool is fixed to a lower surface, which is a tip end surface, of the slide 2. In one example, a pressing jig 12 is fixed to the lower surface of the slide 2.

In one example, the slide 2 has a line symmetrical shape with respect to the reference axis C. In other example, the slide 2 may have a shape different from that described above.

The slide 2 is guided and supported by the pair of support posts 9. The slide 2 has a pair of guide arm units 13 each having a V-shape when seen from the front. A linear guide 14 is provided between tip end portions of the guide arm units 13 and the support posts 9. Thus, the slide 2 is supported by the pair of support posts 9 via the linear guide 14 to be movable in the up-down direction.

### <Main press unit>

In one embodiment, the main press unit 3 has the master shaft 5 that reciprocates the slide 2, causes the slide 2 to perform a reciprocating parallel motion, and applies a thrust to the slide 2. The main press unit 3 has one master shaft 5. A magnitude of the thrust applied from the master shaft 5 to the slide 2 is arbitrary.

The main press unit 3 is disposed above the slide 2, and is supported by the upper frame 10. The master shaft 5 is disposed in the vertical direction.

In addition to the master shaft 5, the main press unit 3 further includes the first servo motor 15 as a drive source, and a first ball screw mechanism 16 that converts rotation of the first servo motor 15 into a linear motion and transmits it to the master shaft 5.

In one example, the main press unit 3 has one first servo motor 15 and one first ball screw mechanism 16.

In one example, the master shaft 5, the first servo motor 15, and the first ball screw mechanism 16 are disposed coaxially. The first servo motor 15 directly drives the first ball screw mechanism 16. In another example, the first servo motor may drive the first ball screw mechanism via a rotation transmission mechanism such as a pulley mechanism.

The first servo motor 15 includes an encoder (not shown), and is controlled by the controller 90.

The first ball screw mechanism 16 includes a first screw shaft 17 having a helical shaft-side ball screw groove on an outer circumferential surface thereof, a first nut 18 having a helical nut-side ball screw groove on an inner circumferential surface thereof, and a plurality of balls (not shown) disposed between the shaft-side ball screw groove and the nut-side ball screw groove.

In one example, the first servo motor 15 rotates the first screw shaft 17 and linearly moves the first nut 18. In another example, the first servo motor may rotate the first nut and may linearly move the first screw shaft.

The first screw shaft 17 is supported by the upper frame 10 to be rotatable only using a plurality of bearings 53. The first screw shaft 17 is inserted into the inside of the first nut 18 and is disposed coaxially with the first nut 18.

The first nut 18 is prevented from co-rotating with the first screw shaft 17. Therefore, the first nut 18 moves linearly in the up-down direction when the first screw shaft 17 is rotationally driven by the first servo motor 15.

The master shaft 5 is fixed to the first nut 18. More specifically, the master shaft 5 has an upper end portion, which is a base end portion, fixed to a lower end portion of the first nut 18. Therefore, the master shaft 5 moves linearly in the up-down direction together with the first nut 18.

In one example, the master shaft 5 is guided and supported by the pair of support posts 9. The master shaft 5 has a pair of guide arm units 19 each having an inverted V shape when seen from the front. A first linear guide 20 is provided between tip end portions of the guide arm units 19 and the support posts 9. The master shaft 5 is supported by the pair of support posts 9 via the first linear guide 20 to be movable in the up-down direction. The master shaft 5 is supported by the support posts 9 via the first linear guide 20, thereby preventing the master shaft 5 from rotating and preventing the first nut 18 from co-rotating with the first screw shaft 17.

### <Sub-press unit>

In one embodiment, the sub-press unit 4 includes the slave shafts (the first slave shaft 6a and the second slave shaft 6b). The slave shafts 6a and 6b are disposed in parallel with the master shaft 5, and apply a thrust to the slide 2 without reciprocating the slide 2. The magnitude of the thrust applied from the slave shafts 6a and 6b to the slide 2 is arbitrary.

The sub-press unit 4 is supported by the upper frame 10. The slave shafts 6a and 6b are disposed in the vertical direction.

In one embodiment, the sub-press unit 4 has a plurality of slave shafts 6a and 6b. Specifically, the sub-press unit 4 has two slave shafts (the first slave shaft 6a and the second slave shaft 6b). For example, the two slave shafts 6a and 6b are identical parts (common parts) having the same shape and size.

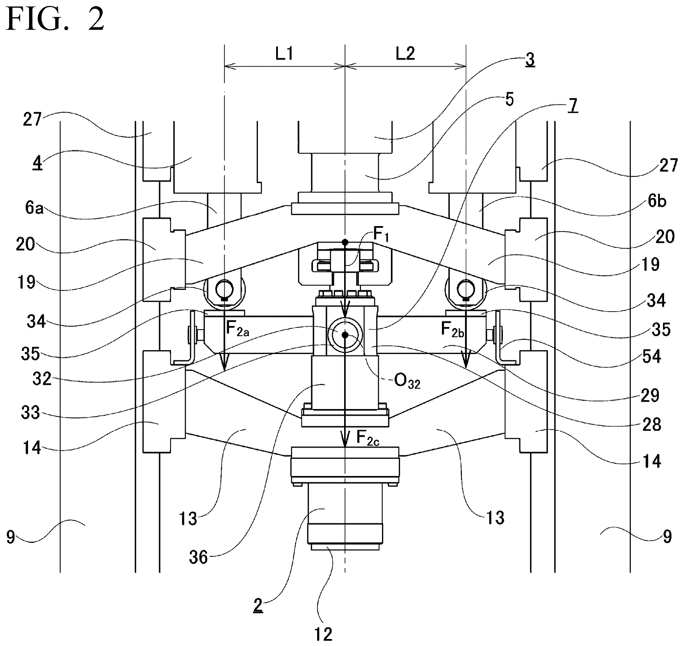

In one embodiment, the two slave shafts 6a and 6b are disposed at positions substantially symmetrical with respect to the master shaft 5 (the reference axis C). Specifically, the two slave shafts 6a and 6b are disposed on both the left and right sides of the master shaft 5 and are disposed in parallel to the master shaft 5. The two slave shafts 6a and 6b are spaced apart from the master shaft 5 (the reference axis C) by the same distance (L1=L2, refer to FIG. 2). The two slave shafts 6a and 6b have respective tip end portions disposed at the same height.

In another embodiment, the sub-press unit may have one or three or more slave shafts, rather than being limited to two. When the sub-press unit has three or more slave shafts, the three or more slave shafts are preferably disposed rotationally symmetrically with respect to the reference axis C. The plurality of slave shafts may have different configurations from each other.

In addition to the slave shafts 6a and 6b, the sub-press unit 4 further includes a second servo motor 21 as a drive source, and second ball screw mechanisms 22a and 22b that convert rotation of the second servo motor 21 into a linear motion and transmit it to the slave shafts 6a and 6b.

In one example, the sub-press unit 4 includes one second servo motor 21 and two second ball screw mechanisms 22a and 22b which are the same number as the slave shafts 6a and 6b. For example, the two second ball screw mechanisms 22a and 22b are identical parts having the same specifications such as lead and efficiency.

The sub-press unit 4 further includes a rotation transmission mechanism 23 for transmitting the rotation of the single second servo motor 21 to the two second ball screw mechanisms 22a and 22b.

The rotation transmission mechanism 23 is configured of two pulley mechanisms 24a and 24b. Each of the pulley mechanisms 24a and 24b is configured of a pair of pulleys and one timing belt. For example, the two pulley mechanisms 24a and 24b have the same reduction gear ratio.

In another embodiment, the plurality of second ball screw mechanisms may have different specifications. The rotation transmission mechanism is not limited to the pulley mechanism, and other power mechanisms such as a gear mechanism and a chain mechanism may be adopted. The plurality of power mechanisms constituting the rotation transmission mechanism are not limited to having the same reduction gear ratio, and may have different reduction gear ratios.

The second servo motor 21 includes an encoder, and is controlled by the controller 90. In one example, the second servo motor 21 is disposed in parallel with the first servo motor 15.

The second ball screw mechanisms 22a and 22b are disposed in parallel to the first ball screw mechanism 16, and are disposed on both sides of the first ball screw mechanism 16 in the left-right direction.

The second ball screw mechanisms 22a and 22b include second screw shafts 25a and 25b having a helical shaft-side ball screw groove on an outer circumferential surface thereof, second nuts 26a and 26b having a helical nut-side ball screw groove on an inner circumferential surface thereof, and a plurality of balls (not shown) disposed between the shaft-side ball screw groove and the nut-side ball screw groove.

In one example, the second servo motor 21 rotates and drives the two second screw shafts 25a and 25b simultaneously via the pulley mechanisms 24a and 24b, and linearly moves the second nuts 26a and 26b simultaneously. In another example, the second servo motor may rotate the second nuts and may linearly move the second screw shafts. The sub-press unit may be provided with the second servo motors in the same number as the second screw shafts and second nuts, and may directly drive the second screw shafts or the second nuts by the second servo motors without using the rotation transmission mechanism.

The second screw shafts 25a and 25b are supported by the upper frame 10 to be only rotatable using the bearings (not shown). The second screw shafts 25a and 25b are inserted through the insides of the second nuts 26a and 26b and are disposed coaxially with the second nuts 26a and 26b.

The second nuts 26a and 26b are prevented from co-rotating with the second screw shafts 25a and 25b. The second nuts 26a and 26b move linearly in the up-down direction by driving the second screw shafts 25a and 25b to be rotated by the second servo motor 21.

The slave shafts 6a and 6b are fixed to the second nuts 26a and 26b. Specifically, upper end portions, which are base end portions, of the slave shafts 6a and 6b are fixed to lower end portions of the second nuts 26a and 26b. The slave shafts 6a and 6b move linearly in the up-down direction together with the second nuts 26a and 26b.

In one example, each of the two slave shafts 6a and 6b is guided and supported by the support post 9. In the example shown in the drawing, the slave shafts 6a and 6b are supported by the support post 9 via a second linear guide 27 to be movable in the up-down direction. The slave shafts 6a and 6b are supported by the support post 9 via the second linear guides 27, thereby preventing the slave shafts 6a and 6b from rotating and preventing the second nuts 26a and 26b from co-rotating with the second screw shafts 25a and 25b.

In one example, the two pulley mechanisms 24a and 24b constituting the rotation transmission mechanism 23 have the same reduction gear ratio, and the two second ball screw mechanisms 22a and 22b have the same specifications. The two slave shafts 6a and 6b move in the up-down direction at the same speed and apply the same magnitude of thrust to the slide 2. In another example, the plurality of slave shafts may move at different speeds.

### <Transmission mechanism>

In one embodiment, the transmission mechanism (the transmission unit) 7 is disposed between the slide 2 and the tip end portion of the master shaft 5. The transmission mechanism 7 is mechanically connected to the slide 2. A force in the pressing direction (the downward direction, the first direction) and a force in the counter-pressing direction (the upward direction, the second direction) are transmitted from the master shaft 5 to the slide 2. The master shaft 5 drives the slide 2 to reciprocate, the slide 2 moves in a reciprocating parallel manner in the up-down direction, and a thrust is applied to the slide 2. A thrust (F1) applied to the slide 2 from the master shaft 5 via the transmission mechanism 7 passes through the reference axis C.

As described above, the press mechanism 1 has a first mode in which the slide 2 is driven with the assistance of the sub-press unit 4, and a second mode in which the slide 2 is driven substantially without the assistance of the sub-press unit 4. In one embodiment, in the press mechanism 1, a mechanical connection state between the first mode and the second mode is changed. In the first mode, the sub-press unit 4 is mechanically connected to the transmission mechanism 7, and in the second mode, a mechanical connection between the sub-press unit 4 and the transmission mechanism 7 is released.

The transmission mechanism 7 is not fixed to the slave shafts 6a and 6b, and is disposed on the front side of the slave shafts 6a and 6b in the pressing direction to be able to come into contact with the slave shafts 6a and 6b. In one example, the transmission mechanism 7 is disposed below the slave shafts 6a and 6b to be able to come into contact with the tip end portions of the slave shafts 6a and 6b. The transmission mechanism 7 does not transmit the force in the counter-pressing direction (the upward direction) from the slave shafts 6a and 6b to the slide 2, but transmits only the force in the pressing direction (the downward direction). The first slave shaft 6a and the second slave shaft 6b are disposed to be spaced apart from each other. In the first mode, both the first slave shaft 6a and the second slave shaft 6b come into contact with a member (a swinging member 29 described below) of the transmission mechanism 7, and in the second mode, both the first slave shaft 6a and the second slave shaft 6b are separated from the member (the swinging member 29) of the transmission mechanism 7. The slave shafts 6a and 6b do not reciprocate the slide 2. When the slave shafts 6a and 6b come into contact with a part of the transmission mechanism 7, a thrust can be applied to the slide 2.

In one example, thrusts (F2a and F2b) having the same magnitude are applied to the transmission mechanism 7 from the two slave shafts 6a and 6b, and distances (L1 = L2) from acting points of the two thrusts (F2a and F2b) to the reference axis C are equal to each other. A resultant force (F2c=F2a+F2b) of the two thrusts (F2a and F2b) applied to the transmission mechanism 7 from the two slave shafts 6a and 6b acts on the reference axis C. In this case, the transmission mechanism 7 can apply, to the slide 2, the thrust (F1) from the master shaft 5 and the thrust (F2c) from the slave shafts 6a and 6b substantially coaxially.

In one example, the press mechanism 1 of this example is configured so that the height positions of the tip end portions of the two slave shafts 6a and 6b are the same, but, due to manufacturing errors and the like, it is difficult to make the height positions of the tip end portions of the two slave shafts 6a and 6b strictly the same. When a misalignment occurs in the height positions of the tip end portions of the two slave shafts 6a and 6b, there is a possibility that a thrust will be applied to the transmission mechanism 7 only from the slave shaft 6a (6b) that first comes into contact with the transmission mechanism 7, and a sufficient thrust will not be applied to the transmission mechanism 7 from the remaining slave shaft 6b (6a).

The sub-press unit 4 or the transmission mechanism 7 has a structure which absorbs a mechanical misalignment that occurs when the sub-press unit 4 operates. For example, in order to be able to apply a thrust from each of the two slave shafts 6a and 6b to the transmission mechanism 7 even when a misalignment occurs in the height positions of the tip end portions of the two slave shafts 6a and 6b, the transmission mechanism 7 has a function of absorbing a positional misalignment of the slave shafts 6a and 6b. In addition, the transmission mechanism 7 can absorb an unintentional misalignment in the height positions of the tip end portions of the slave shafts 6a and 6b caused by manufacturing errors, or the like, and also can absorb a misalignment in the height positions of the tip end portions of the slave shafts 6a and 6b that occur when moving speeds of the slave shafts 6a and 6b are made different. In another embodiment, the sub-press unit 4 may have a structure that absorbs the above-described mechanical misalignment. Alternatively, the press mechanism 1 may have a configuration that does not have a structure that absorbs the mechanical misalignment.

In one example, the transmission mechanism 7 has a seesaw structure to absorb the positional misalignment of the slave shafts 6a and 6b. That is, the transmission mechanism 7 has a support member 28 that is disposed coaxially with the master shaft 5, and a swinging member 29 that is supported by the support member 28 to be swingable around a central axis O₃₂ orthogonal to the central axis (the reference axis C) of the master shaft 5.

In one example, the transmission mechanism 7 includes only one swinging member 29. In another example, the transmission mechanism may include a plurality of swinging members. When the plurality of swinging members are provided, the plurality of swinging members are preferably disposed rotationally symmetrically with respect to the reference axis C.

The support member 28 has an insertion hole 30 passing therethrough in the left-right direction, and a support hole 31 passing therethrough in a front-rear direction. The insertion hole 30 and the support hole 31 communicate with each other inside the support member 28. For example, the support member 28 has a substantially cylindrical shape. The insertion hole 30 has an elliptical cross-sectional shape that is long in the up-down direction. The support hole 31 is a cylindrical hole.

The swinging member 29 is an elongated member that is long in the left-right direction. For example, the swinging member 29 has a rectangular column shape. A length of the swinging member 29 may be slightly greater than a distance (L1+L2) between the central axes of the two slave shafts 6a and 6b. A middle portion of the swinging member 29 is loosely inserted through the insertion hole 30. Both left and right side portions of the swinging member 29 protrude from the insertion hole 30 in the left-right direction.

The swinging member 29 is supported by the support member 28 to be swingable around the central axis O₃₂. Both the left and right side portions of the swinging member 29, which are located on both sides of the support member 28, are displaceable in the up-down direction and are disposed below the slave shafts 6a and 6b to be able to come into contact with the tip end portions of the slave shafts 6a and 6b. Both the left and right side portions of the swinging member 29 are pressed by the tip end portions of the slave shafts 6a and 6b. In one example, since the sub-press unit 4 is provided with the two slave shafts 6a and 6b, the slave shafts 6a and 6b are disposed to be able to respectively come into contact with both the left and right side portions of the swinging member 29. In another example, when the sub-press unit has an even number of slave shafts, preferably, the same number of slave shafts are disposed to be able to come into contact with both the left and right side portions of the swinging member.

In one example, the transmission mechanism 7 further includes a swinging shaft 32 and two bearings 33 that are disposed in a direction orthogonal to the central axis (the reference axis C) of the master shaft 5 and are fixed to the swinging member 29.

The swinging shaft 32 has the central axis O₃₂ and is inserted through the support hole 31. The swinging shaft 32 is fixed to the swinging member 29 in a state in which the swinging shaft 32 passes through a center portion of the swinging member 29 in the left-right direction in the front-rear direction. The bearings 33 support both end portions of the swinging shaft 32to be rotatable relative to the support members 28. The swinging member 29 swings with the central axis O₃₂ of the swinging shaft 32 as a center of swinging. There is no limitation on the type of bearing 33 that can be used. For example, a single-row tapered roller bearing having a large load capacity may be preferably used.

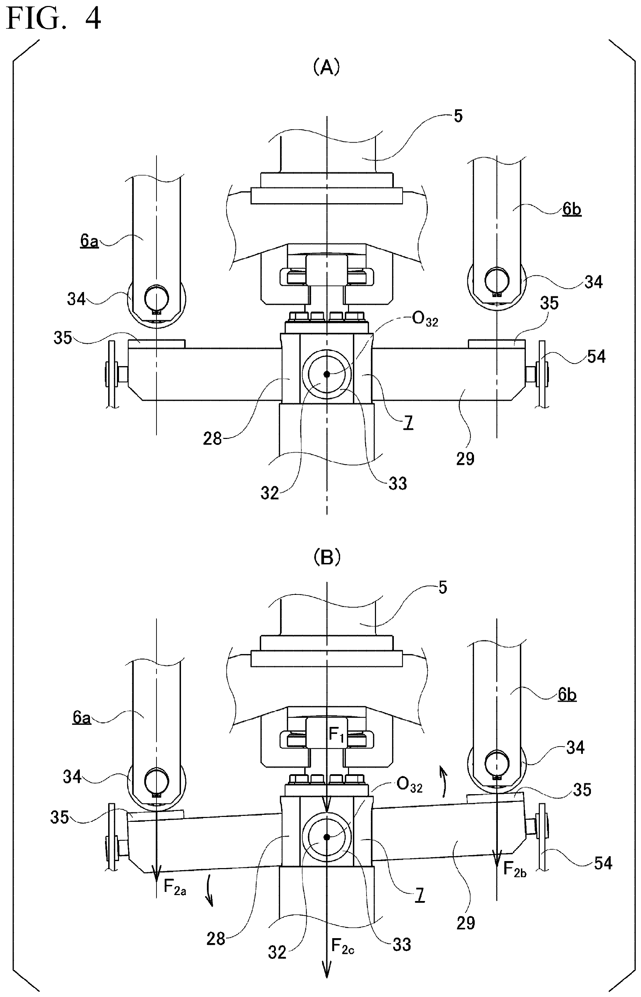

For example, in (A) of FIG. 4, a misalignment occurs in the height positions of the tip end portions of the two slave shafts 6a and 6b. In this case, as shown in (B) of FIG. 4, in the two slave shafts 6a and 6b, one slave shaft 6a (6b) of which the tip end portion is located on the lower side comes into contact with an upper surface of one side portion of the swinging member 29 in the left-right direction, causing the swinging member 29 to swing. Specifically, one slave shaft 6a (6b) presses down one side portion of the swinging member 29 in the left-right direction and presses up the other side portion of the swinging member 29 in the left-right direction. An upper surface of the other side portion of the swinging member 29 in the left-right direction comes into contact with the tip end portion of the other slave shaft 6b (6a) of which the tip end portion is located on the upper side, in the two slave shafts 6a and 6b.

Even when a misalignment occurs in the height positions of the tip end portions of the two slave shafts 6a and 6b, a thrust is applied to the transmission mechanism 7 from each of the two slave shafts 6a and 6b. For example, the tip end portions of the two slave shafts 6a and 6b come into contact with an upper surface of the swinging member 29, and thrusts of substantially the same magnitude are applied to the swinging member 29 from the two slave shafts 6a and 6b. While one slave shaft 6a (6b) is swinging the swinging member 29 (while the swinging member 29 is rotating), substantially no thrust is transmitted from the one slave shaft 6a (6b) to the slide 2.

When one slave shaft 6a (6b) presses down one side portion of the swinging member 29 in the left-right direction, a contact position between the tip end portion of the one slave shaft 6a (6b) and the upper surface of the swinging member 29 is misaligned in the left-right direction. Further, the tip end portions of the two slave shafts 6a and 6b come into contact with the upper surface of the swinging member 29 that is inclined with respect to a horizontal direction.

In one example, the tip end portions of the slave shafts 6a and 6b are provided with rolling members 34 that can roll on the swinging member 29. The tip end portions of the slave shafts 6a and 6b are capable of moving in accordance with the upper surface of the swinging member 29. A thrust in the vertical direction is applied to the upper surface of the swinging member 29, which is inclined with respect to the horizontal direction, from each of the tip end portions of the slave shafts 6a and 6b via each of the rolling members 34. The rolling member 34 has an outer circumferential surface in the shape of a cylindrical surface.

In one example, the rolling member 34 is configured of a bearing, specifically a spherical roller bearing. In another example, the rolling member provided at the tip end portion of the slave shaft is not limited to a bearing, and other members such as rollers may be used.

In one example, the swinging member 29 is provided with a removable seat member 35 at a portion of the swinging member 29 where the tip end portions of the slave shafts 6a and 6b come into contact. For example, the seat member 35 is made of a quench-hardened material.

The transmission mechanism 7 is prevented from rotating relative to the slide 2 by a rotation prevention mechanism 54.

For example, the rotation prevention mechanism 54 is formed by bending a metal plate such as a steel plate into an L-shaped cross section, and has two prevention fittings 55 that are bridged between the linear guide 14 and the swinging member 29.

Specifically, the prevention fitting 55 has a base portion 56 that is supported and fixed to an upper end surface of the linear guide 14 by screwing, welding, or the like, and a standing plate portion 57 that is bent upward from an end portion of the base portion 56 that is closer to the swinging shaft 32 among both end portions thereof in the left and right direction.

The standing plate portion 57 has an engagement hole 58 that passes through the standing plate portion 57 in a plate thickness direction (the left-right direction) and has an oval cross-sectional shape that is long in the up-down direction. A roller 60 rotatably supported around a shaft portion 59 protruding from each of both the left and right end portions of the swinging member 29 is engaged in the engagement hole 58 to be movable in the up-down direction. The rotation prevention mechanism 54 prevents rotation of the swinging member 29 (the transmission mechanism 7) relative to the slide 2 while allowing the swinging member 29 to swing.

In another embodiment, a structure of the transmission mechanism having a function of absorbing the positional misalignment of the slave axis may have a structure other than the seesaw structure described above. For example, the transmission mechanism may have a structure including a swinging member having an arched cross-sectional shape and a spherically recessed outer surface, and a spherical seat that swingably supports the swinging member.

In one embodiment, the press mechanism 1 includes a load cell 36 between the slide 2 and the transmission mechanism 7. Specifically, the load cell 36 is disposed between an upper surface of the slide 2 and a lower surface of the support member 28 that constitutes the transmission mechanism 7. The load cell 36 measures a force applied to the slide 2 via the transmission mechanism 7. For example, the force is the sum (F1+F2c) of the thrust (F1) generated by the main press unit 3 and the thrust (F2c) generated by the sub-press unit 4. There is no particular limitation on the type of the load cell 36. For example, a piezoelectric type, a capacitance type, a strain gauge type, or the like may be used as the load cell 36.

### [Configuration of bearing]

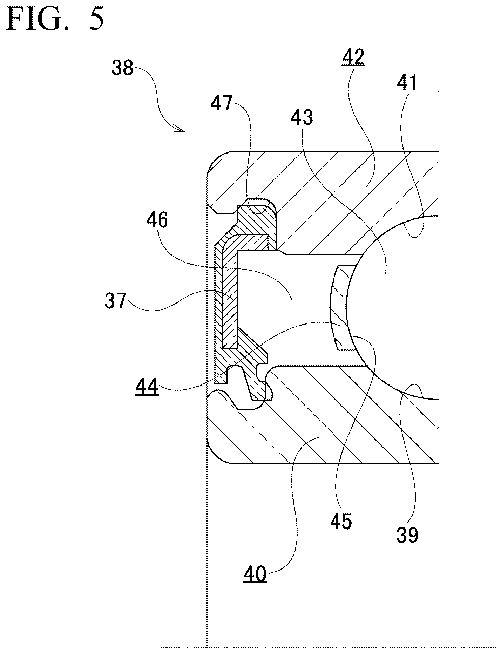

FIG. 5 shows an example of the bearing 38 to be manufactured. In one embodiment, the bearing 38 is a ball bearing. The bearing 38 includes an inner ring 40 having an inner ring raceway 39 on an outer circumferential surface thereof, an outer ring 42 having an outer ring raceway 41 on an inner circumferential surface thereof, and balls 43 which are a plurality of rolling elements disposed freely rollable between the inner ring raceway 39 and the outer ring raceway 41. The balls 43 are disposed at equal intervals in a circumferential direction and are held in pockets 45 provided in a holder 44 so as to be rollable freely. An opening portion of an internal space 46 present between the inner circumferential surface of the outer ring 42 and the outer circumferential surface of the inner ring 40 is closed by the sealing member 37 which is a so-called shield or seal.

The sealing member 37 has a circular ring shape. The sealing member 37 prevents lubricant sealed in the internal space 46 from leaking out to an external space, and prevents foreign matters from entering the internal space 46 from the external space. For example, the sealing member 37 corresponds to a first bearing constituent member and is press-fitted into the outer ring 42 which corresponds to a second bearing constituent member. Specifically, the sealing member 37 has a radially outer end press-fitted into and locked to a locking groove 47 provided at an axial end portion of the inner circumferential surface of the outer ring 42, and is supported by the outer ring 42.

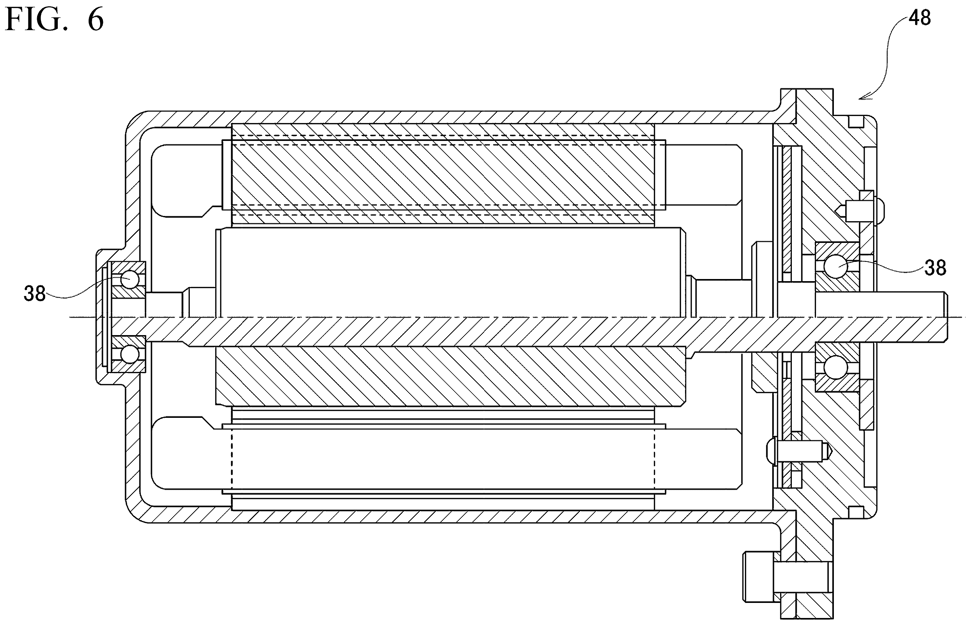

The bearing 38 is incorporated into a motor 48 as shown in FIG. 6 and is also incorporated into a rotation support unit of a vehicle, mechanical device, or the like.

The bearing may be applied to machines having rotating units and various manufacturing devices. The bearing may also be applied to machines (including manually powered devices such as instruments) or vehicles equipped with bearings. In the terms of machines, the present invention may be applied to bearings used in the rotating units of, for example, hydroelectric, thermal, atomic, or wind power generation facilities (applicable to bearings that support a main shaft or rotating shaft of generators), as well as ball screw devices, screw devices, devices that combines a linear guide bearing with a ball screw, actuators such as XY tables, various industrial machines such as machine tools, home appliances, household equipment, and the like. In the terms of vehicles, the present invention may also be applied to bearings used in rotating units of vehicles such as automobiles, motorcycles, railroad cars, and special vehicles. The present invention may also be applied to bearings used in rotating units of steering devices such as steering columns, universal joints, intermediate gears, rack and pinions, electric power steering devices, worm reduction gears, or torque sensors, and to vehicles equipped with such bearings. The resulting machines, vehicles, or the like can be constructed at lower cost and with higher quality than ever before.

The above example is just one example, and as an example of application of bearings, the bearings of such a configuration can be suitably applied to any location at which there is relative rotation, which can lead to improved product quality and reduced costs.

In the above example, the bearing to be manufactured is a ball bearing. In another example, the bearings may be other bearings such as cylindrical roller bearings, tapered roller bearings, needle roller bearings, automatic aligning roller bearings, and hub unit bearings.

The press mechanism may also be used to manufacture a bearing having a configuration in which the sealing member is press-fitted into the inner ring.

### [Description of bearing manufacturing method and press mechanism operation]

Hereinafter, a method for manufacturing the bearing 38 using the press mechanism 1 will be described along with an example of a basic operation of the press mechanism 1.

When a step of press-fitting the sealing member 37 into the outer ring 42 by the press mechanism 1 is performed, first, an intermediate assembly 49, which is a workpiece in process, is set on the bolster 52 fixed to the lower frame 11. Furthermore, the sealing member 37 is set above the intermediate assembly 49. The intermediate assembly 49 refers to a workpiece in process that will be completed as the bearing 38 by assembling the sealing member 37 to the intermediate assembly 49.

Next, the master shaft 5 is driven by the first servo motor 15 of the main press unit 3 via the first ball screw mechanism 16. The slide 2 to which the pressing jig 12 is fixed is lowered (advances) at a predetermined speed from an initial position to a press-fitting start position of the sealing member 37. While the slide 2 is lowered from the initial position to the press-fitting start position of the sealing member 37, the position of the master shaft 5 is controlled. Position information of the master shaft 5 and the slide 2 is calculated from rotation angle information obtained from the encoder of the first servo motor 15.

Simultaneously with or after driving the master shaft 5, the second servo motor 21 of the sub-press unit 4 drives the slave shafts 6a and 6b via the rotation transmission mechanism 23 and the second ball screw mechanisms 22a and 22b, and the slave shafts 6a and 6b are lowered at a predetermined speed to follow the master shaft 5. For example, in an initial stage, the positions of the slave shafts 6a and 6b are controlled so that the tip end portions of the slave shafts 6a and 6b are kept away from the upper surface of the swinging member 29, or so that the tip end portions of the slave shafts 6a and 6b do not press against the upper surface of the swinging member 29 even when they come into contact with it. While the slave shafts 6a and 6b are lowered from the initial position to the press-fitting start position of the sealing member 37, the positions of the slave shafts 6a and 6b are controlled. For example, the position information of the slave shafts 6a and 6b is calculated from the rotation angle information obtained from the encoder of the second servo motor 21.

Next, the master shaft 5 and the slave shafts 6a and 6b are driven, and the thrust from the master shaft 5 and the thrust from the slave shafts 6a and 6b are simultaneously applied to the slide 2. The pressing jig 12 fixed to the slide 2 presses the sealing member 37, and the sealing member 37 is press-fitted into the outer ring 42. Specifically, an outer end of the sealing member 37 in the radial direction is press-fitted and locked into the locking groove 47 provided in the inner circumferential surface of the outer ring 42. While the slide 2 moves from the press-fitting start position to a press-fitting completion position, torque of each of the first servo motor 15 and the second servo motor 21 is controlled.

For example, the torque of the second servo motor 21 is controlled to maintain a constant torque value. Furthermore, an output signal of the load cell 36 is fed back so that the sum of the thrust from the master shaft 5 and the thrust from the slave shafts 6a and 6b becomes a set thrust, and the torque of the first servo motor 15 is controlled. In this way, different torque setting values may be set for the first servo motor 15 and the second servo motor 21.

After the slide 2 has moved to the press-fitting completion position, the second servo motor 21 of the sub-press unit 4 is driven to raise (retract) the slave shafts 6a and 6b at a predetermined speed. Then, the first servo motor 15 of the main press unit 3 is driven to raise the master shaft 5 at a predetermined speed. Alternatively, the slave shafts 6a and 6b and the master shaft 5 are simultaneously raised. The master shaft 5 and the slave shafts 6a and 6b return to respective initial positions thereof.

Through the steps described above, the sealing member 37 is press-fitted into the outer ring 42, and the bearing 38 equipped with the sealing member 37 is manufactured.

In one embodiment, when the magnitude of the thrust required to press-fit the sealing member 37 is equal to or less than a rated thrust of the main press unit 3, only the main press unit 3 may be operated to apply a thrust to the slide 2 only from the master shaft 5. In this case, the sub-press unit 4 is not operated, and the slave shafts 6a and 6b may be stopped.

The press mechanism 1 is easier to control than conventional press mechanisms, and is capable of achieving both high thrust and high speed.

In the press mechanism 1, the master shaft 5 and the slave shafts 6a and 6b are disposed in parallel, and a thrust can be applied to the slide 2 from the master shaft 5 and the slave shafts 6a and 6a. Since the thrust borne by each of the master shaft 5 and the slave shafts 6a and 6a is small, the first servo motor 15 and the second servo motor 21 can be driven at a high rotation speed. Therefore, the press mechanism 1 can achieve both high thrust and high speed.

In the press mechanism 1, since the slave shafts 6a and 6b apply only a thrust to the slide 2 without reciprocating the slide 2, there is no need to simultaneously control the first servo motor 15 and the second servo motor 21. Therefore, according to the press mechanism 1, simpler control is required than in the press mechanism of the conventional structure described in JP 2014-147956 A.

Furthermore, the press mechanism 1 does not generate an uncontrollable region which is a problem with the press mechanism of the conventional structure described in JP H11-221700 A. That is, JP H11-221700 A discloses a structure in which two pulley mechanisms with different reduction gear ratios and a clutch mechanism are incorporated into a single-axis press mechanism. In such a conventional press mechanism, a high thrust is generated in a press processing region by driving the press shaft via a pulley mechanism with a large reduction gear ratio. Furthermore, in the conventional press mechanism, in regions other than the press processing region, the press shaft is driven via a pulley mechanism with a small reduction gear ratio to increase the speed. However, when the clutch mechanism is switched, a mechanical transmission delay occurs, which may result in the uncontrollable region. On the other hand, the above-described press mechanism 1 does not need to switch a power transmission route according to the reduction gear ratio, but only changes the rotation speeds of the first servo motor 15 and the second servo motor 21, and thus does not cause the uncontrollable region.

In the press mechanism 1, the thrust from the master shaft 5 and the thrust from the slave shafts 6a and 6b are coaxially applied to the slide 2. The total force of the thrust generated by the main press unit 3 and the thrust generated by the sub-press unit 4 is applied to the sealing member 37 as a load. In the press mechanism 1, torque of each of the master shaft 5 and the slave shafts 6a and 6b can be controlled. Therefore, press processing can be performed with the maximum torque value that can be exerted by the press mechanism 1. Therefore, with the press mechanism 1, it is possible to achieve both maximum thrust and high speed.

Since the sub-press unit 4 has a plurality of slave shafts 6a and 6b, the thrust borne by each of the slave shafts 6a and 6b is small. This contributes to increasing the speed of the press mechanism 1.

In the press mechanism 1, since the plurality of slave shafts 6a and 6b are disposed at positions symmetrical with respect to the master shaft 5 (the reference axis C), a resultant force (a line of action of a resultant load) of the thrusts applied to the slide 2 from the plurality of slave shafts 6a and 6b is easily restricted to be coaxial with the thrust applied to the slide 2 from the master shaft 5.

For example, thrusts of the same magnitude are applied to the slide 2 from the plurality of slave shafts 6a and 6b. The resultant force of the thrusts applied to the slide 2 from the plurality of slave shafts 6a and 6b is easily restricted to be coaxial with the thrust applied to the slide 2 from the master shaft 5.

The press mechanism 1 is provided with the transmission mechanism 7 between the slide 2 and the master shaft 5 and the slave shafts 6a and 6b. The transmission mechanism 7 is not fixed to the slave shafts 6a and 6b, and is disposed on the front side of the slave shafts 6a and 6b in the pressing direction to be able to come into contact with the slave shafts 6a and 6b. Therefore, the transmission mechanism 7 does not transmit a force in the counter-pressing direction from the slave shafts 6a and 6b to the slide 2, but transmits only a force in the pressing direction. A configuration in which the slave shafts 6a and 6b apply a thrust to the slide 2 without reciprocating the slide 2 is realized.

The transmission mechanism 7 includes the support member 28 disposed coaxially with the master shaft 5, and the swinging member 29 supported by the support member 28 to be swingable around the central axis O₃₂ orthogonal to the central axis of the master shaft 5. The portions of the swinging member 29 located on both sides of the support member 28 are pressed by the tip end portions of the slave shafts 6a and 6b. Even when a misalignment occurs in the height positions of the tip end portions of the slave shafts 6a and 6b, a thrust is applied to the transmission mechanism 7 from each of the slave shafts 6a and 6b.

In the press mechanism 1, thrusts of substantially the same magnitude are applied to the portions of the swinging member 29 located on both sides of the support member 28. Even when a misalignment occurs in the height positions of the tip end portions of the slave shafts 6a and 6b, the resultant force of the thrusts input from the slave shafts 6a and 6b is transmitted to the slide 2 substantially coaxially with the thrust input from the master shaft 5.

In the press mechanism 1, the plurality of slave shafts 6a , 6b that apply the thrust to the portions of the swinging member 29 located on both sides of the support member 28 are driven by a common second servo motor 21. This simplifies the control of the plurality of slave shafts 6a and 6b. Further, it is possible to reduce the number of parts in the press mechanism 1. As a result, costs are reduced.

In the press mechanism 1, the slave shafts 6a and 6b are provided with rolling members 34 capable of rolling on the swinging member 29 at the tip end portions thereof. The tip end portions of the slave shafts 6a and 6b move following the upper surface of the swinging member 29. Furthermore, a thrust in the vertical direction is applied from the tip end portions of the slave shafts 6a and 6b to the upper surface of the swinging member 29, which is inclined with respect to the horizontal direction, via the rolling members 34.

In the press mechanism 1, the rolling members 34 are configured of bearings. The tip end portions of the slave shafts 6a and 6b roll smoothly on the upper surface of the swinging member 29. Since the rolling members 34 are formed of spherical roller bearings, even when the tip end portions of the slave shafts 6a and 6b and the upper surface of the swinging member 29 are inclined relative to each other in the depth direction, the rolling members 34 incline in accordance with the upper surface of the swinging member 29. Furthermore, the tip end portions of the slave shafts 6a and 6b come into stable contact with the upper surface of the swinging member 29 .

In the press mechanism 1, the swinging member 29 is provided with the removable seat member 35 at a portion thereof with which the tip end portions of the slave shafts 6a and 6b come into contact. For example, even when the contact portion is damaged by pressure applied from the tip end portions of the slave shafts 6a and 6b, it becomes possible to replace only the damaged seat member 35 without replacing the entire swinging member 29. Furthermore, since the seat member 35 is made of a quench-hardened material, it is not easily deformed by the pressure applied from the tip end portions of the slave shafts 6a and 6b.

In the press mechanism 1 , the transmission mechanism 7 has a swing shaft 32 and a bearing 33 for supporting the swing shaft 32 rotatably with respect to the support member 28. Therefore, the swinging member 29 can be swung with a small force, and energy required to swing the swinging member 29 is reduced.

In the press mechanism 1, the load cell 36 is provided between the slide 2 and the transmission mechanism 7. The first servo motor 15 can perform torque-control of the press load with respect to the sealing member 37 based on feedback utilizing the output signal of the load cell 36. For example, the thrust applied from the master shaft 5 and the slave shafts 6a and 6b is adjusted to a set thrust required for press-fitting the sealing member 37.

The press mechanism 1 includes the gate-shaped frame 8 having the pair of support posts 9 and the upper frame 10 bridged between the pair of support posts 9. Therefore, tilting of the pressing jig 12 during the press processing is suppressed.

In the press mechanism 1, the master shaft 5 is supported movably relative to the support post 9 via the first linear guide 20. In addition, the slave shafts 6a and 6b are supported movably relative to the support posts 9 via the second linear guide 27. Therefore, the master shaft 5 and the slave shafts 6a and 6b are prevented from rotating. Furthermore, the first nut 18 to which the master shaft 5 is fixed is prevented from co-rotating with the first screw shaft 17. Furthermore, the second nuts 26a and 26b to which the slave shafts 6a and 6b are fixed are prevented from co-rotating with the second screw shafts 25a and 25b.

In the press mechanism 1, the main press unit 3 has the first servo motor 15 which is a drive source, and the first ball screw mechanism 16 which converts the rotation of the first servo motor 15 into a linear motion and transmits it to the master shaft 5. The sub-press unit 4 also has the second servo motor 21 which is a drive source, and the second ball screw mechanisms 22a and 22b which convert the rotation of the second servo motor 21 into a linear motion and transmit it to the slave shafts 6a and 6b. Therefore, the press mechanism 1 is made energy-efficient and quieter.

The sub-press unit 4 includes the plurality of slave shafts 6a and 6b, the second ball screw mechanisms 22a and 22b in the same number as the slave shafts 6a and 6b, and the rotation transmission mechanism 23 that transmits the rotation of the second servo motor 21 to the plurality of second ball screw mechanisms 22a and 22b. Therefore, it is possible to reduce the number of second servo motors 21 used, thereby reducing the cost and size of the press mechanism 1.

When the sealing member 37 is press-fitted into the outer ring 42 using the press mechanism 1, the slide 2 is driven by the master shaft 5 and moved to a processing start position of the sealing member 37 which is the workpiece, and then thrusts are simultaneously applied to the slide 2 from the master shaft 5 and the slave shafts 6a and 6b. Thus, it is possible to simplify the control for moving the slide 2 to the processing start position. Also, a moving speed of the slide 2 when the slide 2 moves from the processing start position to a processing completion position can be increased, and a large thrust can be applied to the slide 2.

In this example, when the sealing member 37 is press-fitted into the outer ring 42 using the press mechanism 1, if the magnitude of the thrust required to press-fit the sealing member 37 is equal to or less than the rated thrust of the main press unit 3, a method in which the thrust is applied to the slide 2 only from the master shaft 5 can be adopted. In this case, the sub-press unit 4 is not operated and the slave shafts 6a and 6b can be stopped, which contributes to energy saving of the press mechanism 1.

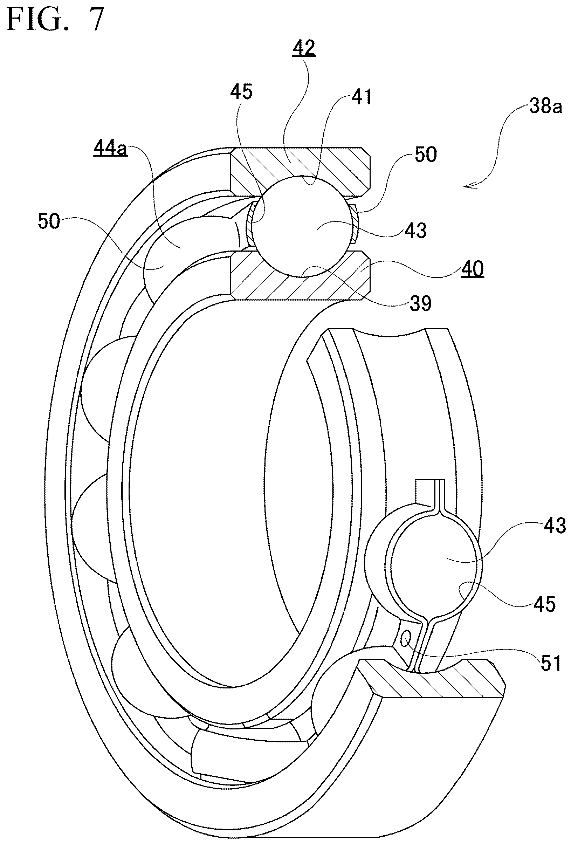

Next, another embodiment will be described with reference to FIG. 7.

FIG. 7 shows a bearing 38a including a holder 44a to be manufactured by the press mechanism 1 (refer to FIG. 1). In one embodiment, the holder 44a corresponds to a third bearing constituent member.

The holder 44a is configured of a pair of holder elements 50 each having an annular shape. The pair of holder elements 50 are coupled to each other by caulking portions 51 formed at a plurality of locations in the circumferential direction. The press mechanism 1 is used in a process of forming the caulking portions 51 in the holder elements 50, and thus, the holder 44a is manufactured.

The other configurations and effects are the same as those of the above-described embodiment.

The technical scope of the present invention is not limited to the scope described in the embodiments. Various modifications and improvements can be made to the embodiments. Such modifications and improvements may also fall within the technical scope of the present invention. Further, the present invention is not limited to the embodiments described above, and may be implemented in any combination of these configurations.

The present disclosure includes the following combinations.

In one aspect, a servo press mechanism includes a slide, a main press unit having a master shaft, and a sub-press unit having a slave shaft. The slide is movable in a first direction which is a pressing direction, and in a second direction different from the first direction based on driving due to the main press unit. A mechanical connection state between the sub-press unit and the slide changes between a first mode in which the slide is driven with assistance of the sub-press unit and a second mode in which the slide is driven substantially without the assistance of the sub-press unit.

In the servo press mechanism according to the above aspect, the slide moves in the first direction in the first mode, and moves in the first direction or the second direction in the second mode.

In any one of the servo press mechanisms according to the above aspects, the servo press mechanism further includes a transmission unit mechanically connected to the slide, wherein in the first mode, the sub-press unit is mechanically connected to the transmission unit, and in the second mode, the mechanical connection between the sub-press unit and the transmission unit is released.

In any one of the servo press mechanisms according to the above aspects, the sub-press unit includes a first slave shaft and a second slave shaft as the slave shaft, the first slave shaft and the second slave shaft are disposed to be apart from each other, in the first mode, both the first slave shaft and the second slave shaft come into contact with a member of the transmission unit, and in the second mode, both the first slave shaft and the second slave shaft are separated from the member of the transmission unit.

In any one of the servo press mechanisms according to the above aspects, the sub-press unit or the transmission unit has a structure which absorbs a mechanical misalignment that occurs when the sub-press unit operates.

In another aspect, a press mechanism includes a slide, a main press unit having a master shaft that reciprocates the slide, moves the slide in a reciprocating parallel manner, and applies a thrust to the slide, and a sub-press unit having a slave shaft that is disposed in parallel with the master shaft and applies a thrust to the slide without reciprocating the slide.

In the press mechanism according to the above aspect, the slide and the master shaft are connected to each other directly or via another member to transmit a force in a pressing direction and a counter-pressing direction from the master shaft to the slide, the slide and the slave shaft are not connected directly or via another member, and only the force (the thrust) in the pressing direction is transmitted from the slave shaft to the slide.

In any one of the press mechanisms according to the above aspects, a thrust from the master shaft and a thrust from the slave shaft are applied coaxially to the slide.

In any one of the press mechanisms described above, the sub-press unit has a plurality of the slave shafts.

In any one of the press mechanisms according to the above aspects, the plurality of slave shafts are disposed symmetrically with the master shaft as a center.

In any one of the press mechanisms according to the above aspects, the plurality of slave shafts apply thrusts of the same magnitude to the slide.

In any one of the press mechanisms according to the above aspects, a transmission mechanism is provided between the slide and the master shaft and the slave shaft, and the transmission mechanism is not fixed to the slave shaft and is disposed on the front side of the slave shaft in the pressing direction to be able to come into contact with the slave shaft.

In any one of the press mechanisms according to the above aspects, the sub-press unit includes a plurality of slave shafts, the transmission mechanism includes a support member disposed coaxially with the master shaft, and a swinging member supported by the support member to be swingable around a central axis orthogonal to a central axis of the master shaft, and the swinging member has portions located on both sides of the support member that are pressed by tip end portions of the slave shafts.

In any one of the press mechanisms according to the above aspects, thrusts of the same magnitude are applied to the swinging member at the portions located on both sides of the support member.

In any one of the press mechanisms according to the above aspects, the plurality of slave shafts that apply thrusts to the portions of the swinging member that are located on both sides of the support member are driven by a common servo motor.

In any one of the press mechanisms according to the above aspects, the slave shaft is provided with a rolling member capable of rolling on the swinging member at the tip end portion thereof.

In any one of the press mechanisms according to the above aspects, the rolling member is formed of a bearing.

In any one of the press mechanisms according to the above aspects, the rolling member is formed of a spherical roller bearing.

In any one of the press mechanisms according to the above aspects, the swinging member is provided with a removable seat member at a portion of the swinging member where the tip end portion of the slave shaft comes into contact.

In any one of the press mechanisms according to the above aspects, the seat member is made of a quench-hardened material.

In any one of the press mechanisms according to the above aspects, the transmission mechanism includes a swinging shaft that is disposed in a direction orthogonal to a central axis of the master shaft and is fixed to the swinging member, and a bearing that supports the swinging shaft rotatably with respect to the support member.

In any one of the press mechanisms according to the above aspects, a load cell is provided between the slide and the transmission mechanism.

In any one of the press mechanisms in the above aspects, a gate-shaped frame having a pair of support posts and an upper frame bridged between the pair of support posts is provided, and the main press unit and the sub-press unit are supported by the upper frame.

In any one of the press mechanisms described above, the master shaft and the slave shaft are movably supported by the support posts via linear guides.

In any one of the press mechanisms according to the above aspects, the main press unit includes a first servo motor and a first ball screw mechanism that converts rotation of the first servo motor into a linear motion and transmits the linear motion to the master shaft, and the sub-press unit has a second servo motor and a second ball screw mechanism that converts rotation of the second servo motor into a linear motion and transmits the linear motion to the slave shaft.

In any one of the press mechanisms according to the above aspects, the sub-press unit includes a plurality of slave shafts, the same number of second ball screw mechanisms as the slave shafts, and a rotation transmission mechanism that transmits the rotation of the second servo motor to the plurality of second ball screw mechanisms.

In any one of the press mechanisms according to the above aspects, the slide is driven by the master shaft to move the slide to a processing start position of a workpiece, and then thrusts are simultaneously applied to the slide from the master shaft and the slave shafts.

In any one of the press mechanisms according to the above aspects, when a magnitude of the thrust required to process a workpiece (a required press load) is equal to or less than a rated thrust of the main press unit, a thrust is applied to the slide only from the master shaft.

In another aspect, a press processing method includes driving the slide by the master shaft, moving the slide to a processing start position of a workpiece, and then simultaneously applying thrusts to the slide from the master shaft and the slave shafts.

In the press processing method of the above aspect, when the magnitude of the thrust required for processing a workpiece is equal to or less than the rated thrust of the main press unit, a thrust is applied to the slide only from the master shaft.

In another aspect, a bearing manufacturing method includes a step of pressing a first bearing constituent member constituting a bearing and press-fitting the first bearing constituent member into a second bearing constituent member constituting the bearing, or a step of caulking and deforming a third bearing constituent member constituting the bearing, using the press mechanism of any one of the first to twenty-first aspects of the present disclosure.

In the bearing manufacturing method according to the above aspect, the first bearing constituent member is a sealing member, and the second bearing constituent member is an outer ring or an inner ring.

In still another aspect, a mechanical device manufacturing method is a method for manufacturing a mechanical device including a bearing, and includes a step of manufacturing the bearing by the bearing manufacturing method of the twenty-fourth aspect of the present disclosure.

In yet another aspect, a vehicle manufacturing method is a method for manufacturing a vehicle including a bearing, and includes a step of manufacturing the bearing by the bearing manufacturing method of the twenty-fourth aspect of the present disclosure.

### REFERENCE SIGNS LIST

1 Press mechanism (servo press mechanism)
2 Slide
3 Main press unit
4 Sub-press unit
5 Master shaft
6a, 6b Slave shaft
7 Transmission mechanism (transmission unit)
8 Frame
9 Support post
10 Upper frame
11 Lower frame
12 Pressing jig
13 Guide arm unit
14 Linear guide
15 First servo motor
16 First ball screw mechanism
17 First screw shaft
18 First nut
19 Guide arm unit
20 First linear guide
21 Second servo motor
22a, 22b Second ball screw mechanism
23 Rotation transmission mechanism
24a, 24b Pulley mechanism
25a, 25b Second screw shaft
26a, 26b Second nut
27 Second linear guide 28 Support member 29 Swinging member 30 Insertion hole 31 Support hole 32 Swinging shaft 33 Bearing 34 Rolling member 35 Seat member 36 Load cell 37 Sealing member 38a, 38b Bearing 39 Inner ring raceway 40 Inner ring 41 Outer ring raceway 42 Outer ring 43 Ball 44, 44a Holder 45 Pocket 46 Internal space 47 Locking groove 48 Motor 49 Intermediate assembly 50 Holder element 51 Caulking portion 52 Bolster
53 Bearing
54 Rotation prevention mechanism
55 Prevention fitting
56 Base portion
57 Standing plate portion
58 Engagement hole
59 Shaft portion
60 Roller
90 Controller

## Claims

1. A servo press mechanism comprising:
a slide;
a main press unit having a master shaft; and
a sub-press unit having a slave axis,
wherein the slide is movable in a first direction which is a pressing direction, and in a second direction different from the first direction, based on driving due to the main press unit, and
a mechanical connection state between the sub-press unit and the slide changes between a first mode in which the slide is driven with assistance of the sub-press unit and a second mode in which the slide is driven substantially without the assistance of the sub-press unit.

2. The servo press mechanism of claim 1, wherein the slide moves in the first direction in the first mode, and moves in the first direction or the second direction in the second mode.

3. The servo press mechanism of claim 1 or 2, further comprising a transmission unit mechanically connected to the slide,
wherein in the first mode, the sub-press unit is mechanically connected to the transmission unit, and in the second mode, the mechanical connection between the sub-press unit and the transmission unit is released.

4. The servo press mechanism of claim 3, wherein the sub-press unit includes a first slave shaft and a second slave shaft as the slave shaft,
the first slave shaft and the second slave shaft are disposed to be apart from each other, and
in the first mode, both the first slave shaft and the second slave shaft come into contact with a member of the transmission unit, and in the second mode, both the first slave shaft and the second slave shaft are separated from the member of the transmission unit.

5. The servo press mechanism of claim 3 or 4, wherein the sub-press unit or the transmission unit has a structure which absorbs a mechanical misalignment that occurs when the sub-press unit operates.

6. A servo press mechanism comprising:
a slide;
a main press unit having a master shaft that reciprocates the slide, moves the slide in a reciprocating parallel manner, and applies a thrust to the slide; and
a sub-press unit having a slave shaft that is disposed in parallel with the master shaft and applies a thrust to the slide without reciprocating the slide.

7. The servo press mechanism of claim 6, wherein the slide and the master shaft are connected to each other directly or via another member to transmit a force in a pressing direction and a counter-pressing direction from the master shaft to the slide, and
the slide and the slave shaft are not connected directly or via another member, and only the force in the pressing direction is transmitted from the slave shaft to the slide.

8. The servo press mechanism of claim 6 or 7, wherein a transmission mechanism is provided between the slide and the master shaft and the slave shaft, and
the transmission mechanism is not fixed to the slave shaft, and is disposed on a front side of the slave shaft in the pressing direction so as to come into contact with the slave shaft.

9. The servo press mechanism of claim 8, wherein the sub-press unit has a plurality of the slave shafts,
the transmission mechanism includes a support member disposed coaxially with the master shaft, and a swinging member supported on the support member to be swingable around a central axis orthogonal to a central axis of the master shaft, and
the swinging member has portions located on both sides of the support member that are pressed by tip end portions of the slave shafts.

10. The servo press mechanism of claim 9, wherein the plurality of slave shafts that apply thrusts to the portions of the swinging member located on both sides of the support member are driven by a common servo motor.

11. The servo press mechanism of claim 9 or 10, wherein each of the plurality of slave shafts is provided with a rolling member configured to roll on the swinging member at the tip end portion thereof.

12. The servo press mechanism of any one of claims 9 to 11, wherein the swinging member is provided with a removable seat member at a portion thereof with which the tip end portion of the slave shaft comes into contact.

13. The servo press mechanism of any one of claims 9 to 12, wherein the transmission mechanism includes a swinging shaft that is disposed in a direction orthogonal to a central axis of the master shaft and is fixed to the swinging member, and a bearing that supports the swinging shaft rotatably relative to the support member.

14. The servo press mechanism of any one of claims 9 to 13, wherein a load cell is provided between the slide and the transmission mechanism.

15. The servo press mechanism of any one of claims 6 to 14, comprising a frame formed in a gate shape and having a pair of support posts and an upper frame bridged between the pair of support posts,
wherein the main press unit and the sub-press unit are supported by the upper frame.

16. A press processing method for processing a workpiece using the servo press mechanism according to any one of claims 1 to 15.

17. A bearing manufacturing method for manufacturing a bearing using the servo press mechanism according to any one of claims 1 to 15.

18. A mechanical device manufacturing method comprising:
manufacturing a bearing using the manufacturing method according to claim 17; and
assembling a mechanical device using the bearing.

19. A vehicle manufacturing method comprising:
manufacturing a bearing using the manufacturing method according to claim 17; and
assembling a vehicle using the bearing.
